# EUROPEAN PATENT SPECIFICATION

(11) **EP 2 147 834 B1**
(45) Date of publication and mention of the grant of the patent: **26.10.2011**
(21) Application number: 08711334.6
(22) Date of filing: 15.02.2008
(51) Int. Cl.: B60R 21/34

(54) **AIR-BAG DEVICE FOR WALKER AND CAR WITH THE SAME**
AIRBAG-VORRICHTUNG FÜR FUSSGÄNGER UND DAMIT AUSGESTATTETES AUTO
DISPOSITIF DE COUSSIN GONFLABLE DE SÉCURITÉ POUR PIÉTON ET VÉHICULE ÉQUIPÉ DU MÊME DISPOSITIF

(30) Priority: 21.05.2007 JP 2007134308
(43) Date of publication of application: 27.01.2010
(73) Proprietor: Takata Corporation, Tokyo 107-8508 (JP)
(72) Inventor: TAKIMOTO, Takayuki, Tokyo 107-8508 (JP)
(74) Representative: Vossius & Partner
(86) International application number: PCT/JP2008/052504
(87) International publication number: WO 2008/142884

(56) References cited:
- DE-A1- 19 803 165
- JP-A- 7 108 903
- JP-A- 2002 283 939
- JP-A- 2005 096 686
- JP-A- 2006 076 448
- JP-A- 2006 298 150

## Description

### Technical Field

The present invention relates to an air bag device for pedestrian for preventing pedestrians (pedestrians, two-wheel occupants and the like) from being directly hit by an A-pillar by inflating an air bag along the A-pillar of a car body and an automobile equipped with this air bag device for pedestrian.

### Background Art

Such an air bay device according to the preambe of claim 1 is disclosed in the document DE 198 03 165 A1 As an automobile provided with this type of air bag device for pedestrian, Japanese Unexamined Patent Application Publication No. 2005-96686 describes an automobile in which an air bag folded body is arranged along an A-pillar of a car body and a pillar outer is equipped on the A-pillar so as to cover the air bag folded body. An air bag device to be equipped on this A-pillar requires more compact arrangement and mounting than prior-art curtain air bag or the like since the A-pillar itself has a narrow structure.

According to the automobile equipped with air bag device for pedestrian in the above gazette, when the air bag is inflated, the pillar outer is pushed out by the air bag and opened, and the air bag is inflated and extended along the A-pillar.

In the automobile equipped with air bag device for pedestrian in the above Japanese Unexamined Patent Application Publication No. 2005-96686, a molding is provided so as to cover an edge portion on the A-pillar side of a wind shield, but more effective arrangement structure has been in demand.

### Disclosure of Invention

The present invention has an object as defined in claim 1 to provide an air bag device for pedestrian assuming a function of such a molding and an automobile with air bag device for pedestrian having the air bag device for pedestrian assume the function of the molding.

In an automobile equipped with an air bag device for pedestrian having an air bag folded body arranged along an A-pillar of a car body, a cover covering the air bag folded body, and an inflator for inflating the air bag, the air bag device for pedestrian is arranged at an intersection corner portion between the A-pillar of the car body and a wind shield, and at least a part of the cover covers a front face side on a side edge of the wind shield.

An automobile with air bag device for pedestrian in another aspect is characterized in that, the A-pillar is provided with an A-pillar main body and a pillar outer arranged on an outer face of the A-pillar main body, and the air bag device for pedestrian is arranged at an intersection corner portion between the pillar outer and the wind shield.

An automobile with air bag device for pedestrian in another aspect is characterized in that, the cover extends from an upper end to a lower end of a side edge of the wind shield.

The cover is provided with a lower cover covering a lower side of the air bag folded body and an upper over covering an upper side of the air bag folded body, and edge portions of the lower cover and the upper cover on the side opposite the pillar outer are engaged so that they can be separated when the air bag is inflated.

In an air bag device for pedestrian provided with an air bag folded body arranged along an A- pillar of a car body, a cover covering the air bag folded body, and an inflator for inflating the air bag, the air bag device for pedestrian is arranged at an intersection corner portion between the A-pillar of the car body and a wind shield, and at least a part of the cover covers a front face side of a side edge of the wind shield.

The air bag device for pedestrian is arranged at an intersection corner portion between a pillar outer of the car body and the wind shield.

An air bag device for pedestrian in another aspect is characterized in that, in the fifth or sixth aspect, the cover extends from an upper end to a lower end of a side edge of the wind shield of the car body.

The cover is provided with a lower cover covering a lower side of the air bag folded body and an upper cover covering an upper side of the air bag folded body, and edge portions of the lower cover and the upper cover on the side opposite the pillar outer are engaged so that they can be separated when the air bag is inflated.

### Brief Description of Drawings

[Fig. 1] Fig. 1 is a perspective view of an automobile with air bag device for pedestrian according to an embodiment close to an A-pillar.
[Fig. 2] Fig. 2 is a sectional view along II-II line in Fig. 1.
[Fig. 3] Fig. 3 is a sectional view along III-III line in Fig. 1.
[Fig. 4] Fig. 4 is a sectional view of a portion similar to Fig. 2 when an air bag is inflated.
[Fig. 5] Fig. 5 is a perspective view of the air bag device for pedestrian mounted on the automobile in Fig. 1.
[Fig. 6] Fig. 6 is a perspective view of the air bag device for pedestrian seen from VI direction in Fig. 5.
[Fig. 7] Fig. 7 is an exploded perspective view of the air bag device for pedestrian in Fig. 5.
[Fig. 8] Fig. 8 is a sectional perspective view along VIII-VIII line in Fig. 5.
[Fig. 9] Fig. 9 is a sectional perspective view seen from IX direction in Fig. 8.
[Fig. 10] Fig. 10A is a side view of a base plate of the air bag device for pedestrian in Fig. 5, Fig. 10B is a top view of a B portion in Fig. 10A, and Fig. 10C is a sectional view along C-C line in Fig. 10B.
[Fig. 11] Fig. 11A is a side view of an upper cover of the air bag device for pedestrian in Fig. 5, and Fig. 11B is a top view of the upper cover.
[Fig. 12] Fig. 12 is a sectional view along XII-XII line in Fig. 11A.
[Fig. 13] Fig. 13 is a sectional view along XIII-XIII line in Fig. 11A.
[Fig. 14] Fig. 14 is a sectional view along XIV-XIV line in Fig. 11A.
[Fig. 15] Fig. 15 is a sectional view along XV-XV line in Fig. 11A.
[Fig. 16] Fig. 16A is a side view of a lower cover of the air bag device for pedestrian in Fig. 5, and Fig. 16B is a top view of the lower cover.
[Fig. 17] Fig. 17 is a sectional view along XVII-XVII line in Fig. 16A.
[Fig. 18] Fig. 18 is a sectional view along XVIII-XVIII line in Fig. 16A.
[Fig. 19] Fig. 19 is a sectional view along XIX-XIX line in Fig. 16A.
[Fig. 20] Fig. 20 is an end face view along XX-XX line in Fig. 16A.
[Fig. 21] Fig. 21 is an exploded perspective view illustrating assembling procedures of the air bag device for pedestrian in Fig. 5.
[Fig. 22] Fig. 22 is an exploded perspective view illustrating assembling procedures of the air bag device for pedestrian in Fig. 5.
[Fig. 23] Fig. 23 is an exploded perspective view illustrating assembling procedures of the air bag device for pedestrian in Fig. 5.
[Fig. 24] Fig. 24 is a sectional view along XXIV-XXIV line in Fig. 23.
[Fig. 25] Fig. 25 is a sectional view along XXV-XXV line in Fig. 23.

### Best Modes for Carrying Out the Invention

In an automobile with air bag device for pedestrian an air bag device for pedestrian is arranged at an intersection corner portion between an A-pillar of a car body and a wind shield, and at least a part of a cover covering an air bag folded body of the air bag device for pedestrian covers a front face side of a side edge of the wind shield, and it is not necessary to provide a molding at the intersection corner portion between the A-pillar and the side edge of the wind shield. Also, as a result, an assembling work of the automobile with air bag device for pedestrian is simplified.

In the automobile with air bag device for pedestrian , the air bag device for pedestrian covers the intersection corner portion between a pillar outer and the wind shield as a molding. Also, in the automobile with air bag device for pedestrian, design freedom of the A-pillar is high.

In the automobile with air bag device for pedestrian in another aspect, since a cover extends from an upper end to a lower end of a side edge of the wind shield, it is not necessary to provide a molding over substantially the entire side edge of the wind shield. Also, since the side edge of the wind shield is continuously covered by the cover from the upper end to the lower end, its appearance is favorable.

In the automobile with air bag device for pedestrian , the cover is provided with a lower cover covering a lower side of an air bag folded body and an upper cover covering an upper side of the air bag folded body, and their edge portions on the side opposite the pillar outer are engaged so that they can be separated when the air bag is inflated. Since with this cover, a joint between the lower cover and the upper cover is difficult to be seen from the front, its appearance is favorable. When the air bag is inflated, the edge portions of the lower cover and the upper cover on the side opposite the pillar outer are separated, the upper cover is opened upward, and the air bag is inflated and extended along the A-pillar.

The air bag device for pedestrian is arranged at the intersection corner portion between the A-pillar of the car body and the wind shield so as to assume a function of a molding.

The air bag device for pedestrian in another aspect covers the intersection corner portion between the pillar outer and the wind shield. By using the air bag device for pedestrian in the sixth aspect, design freedom of the A-pillar of an automobile becomes high.

In the air bag device for pedestrian in another aspect, since the cover extends from the upper end to the lower end of the side edge of the wind shield, a molding is no longer needed over substantially the entire side edge of the wind shield. Also, since the side edge of the wind shield is continuously covered by the cover from the upper end to the lower end, its appearance is favorable.

In the air bag device for pedestrian in another aspect, the cover is provided with the lower cover covering the lower side of the air bag folded body and the upper cover covering the upper side of the air bag folded body, and their edge portions on the side opposite the pillar outer are engaged so that they can be separated when the air bag is inflated. Since with this cover, the joint between the lower cover and the upper cover is difficult to be seen from the front, its appearance is favorable. When the air bag is inflated, the edge portions of the lower cover and the upper cover on the side opposite the pillar outer are separated, the upper cover is opened upward, and the air bag is inflated and extended along the A-pillar.

An embodiment of the present invention will be described below referring to the attached drawings.

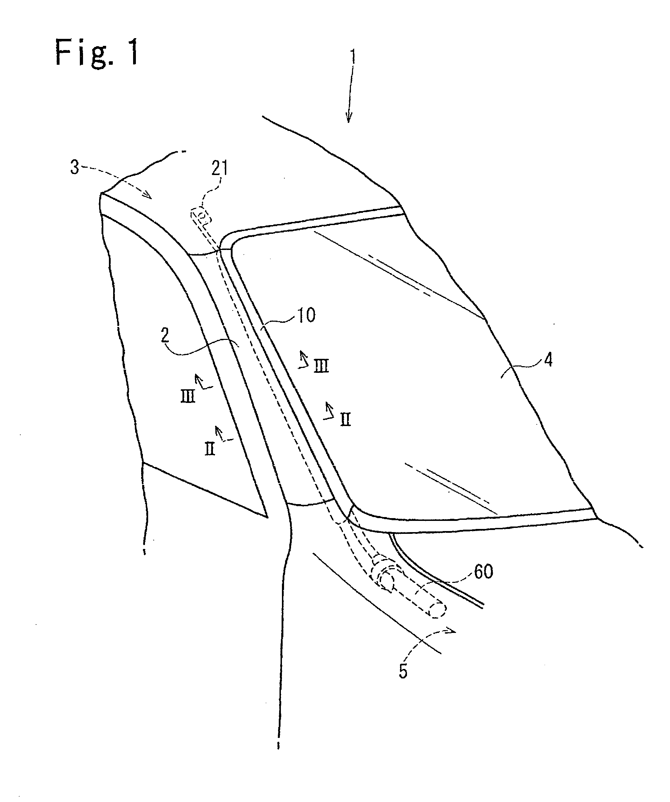

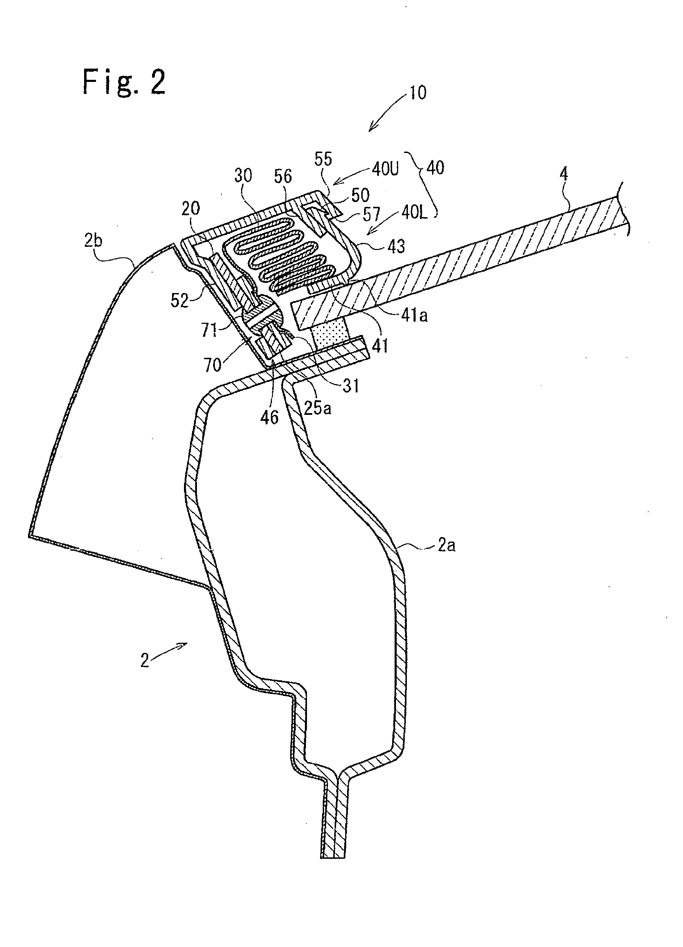

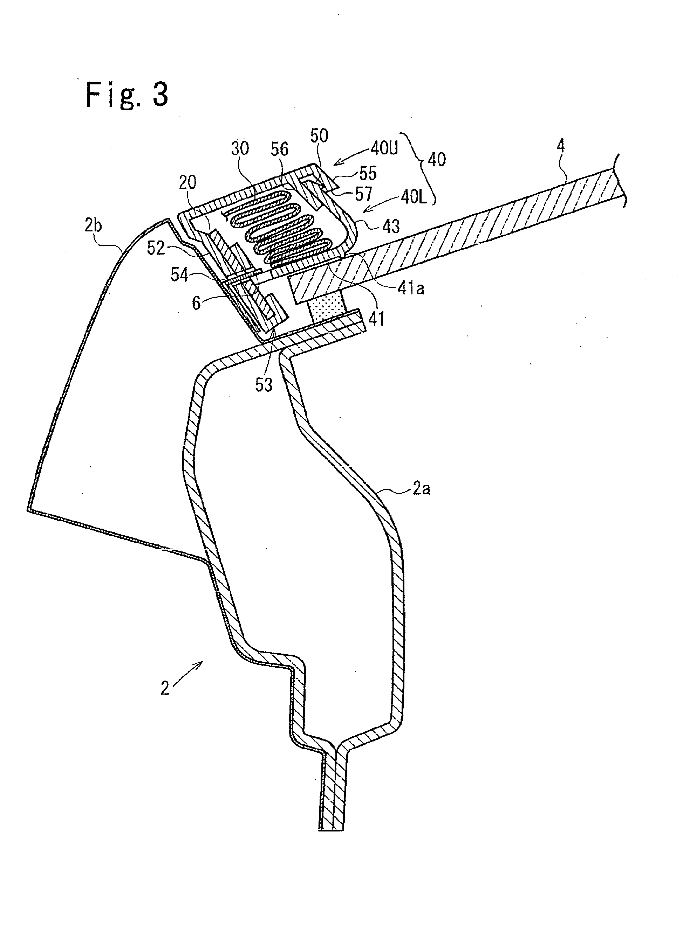

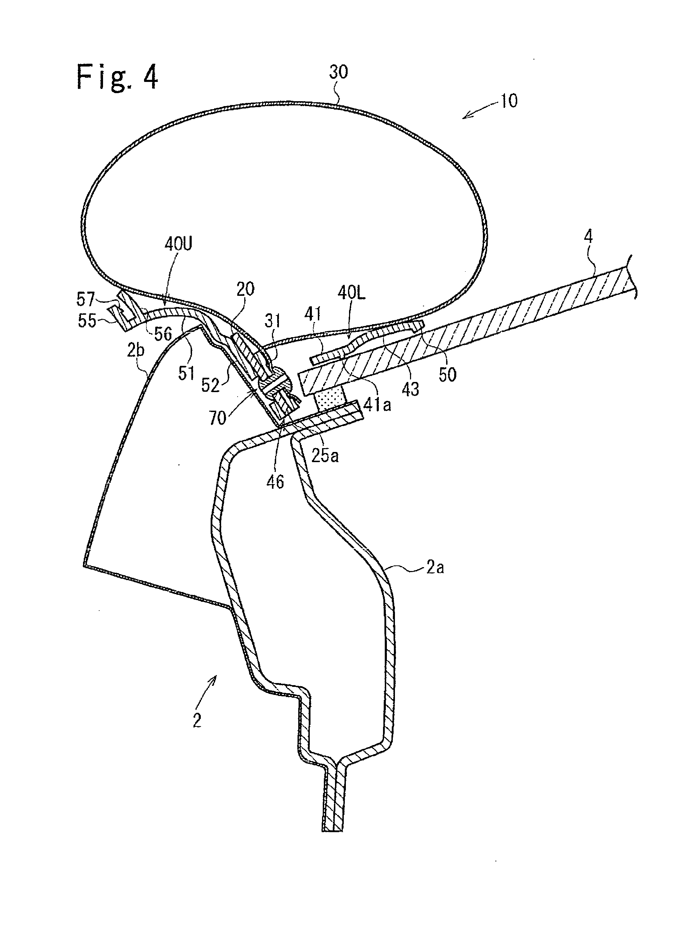

Fig. 1 is a perspective view of an automobile with air bag device for pedestrian according to an embodiment close to an A-pillar, Fig. 2 and Fig. 3 are sectional views along II-II line and III-III line in Fig. 1, respectively, and Fig. 4 is a sectional view of a portion similar to Fig. 2 when an air bag is inflated.

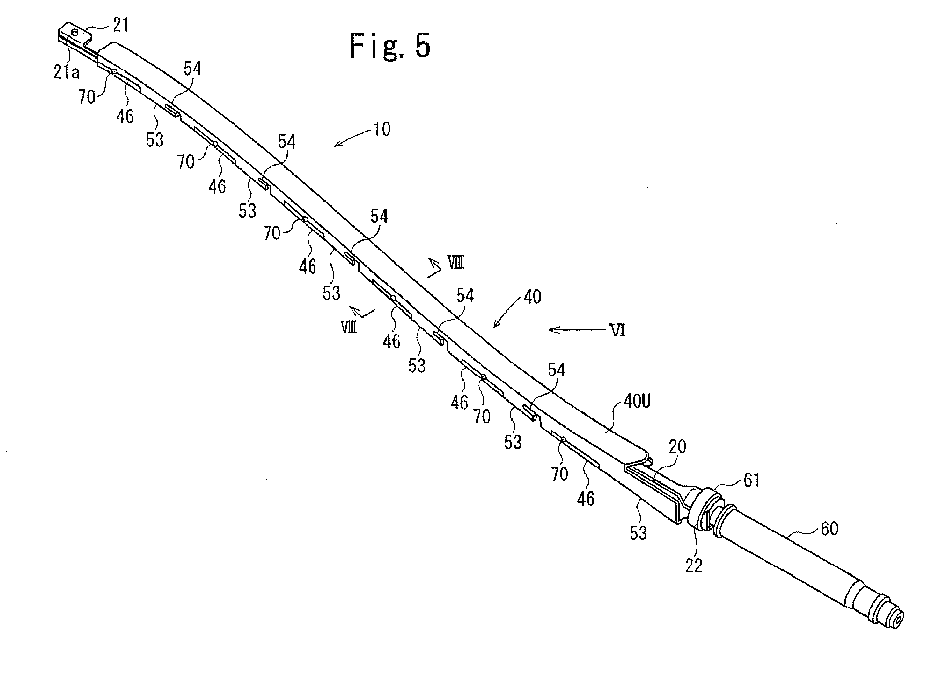

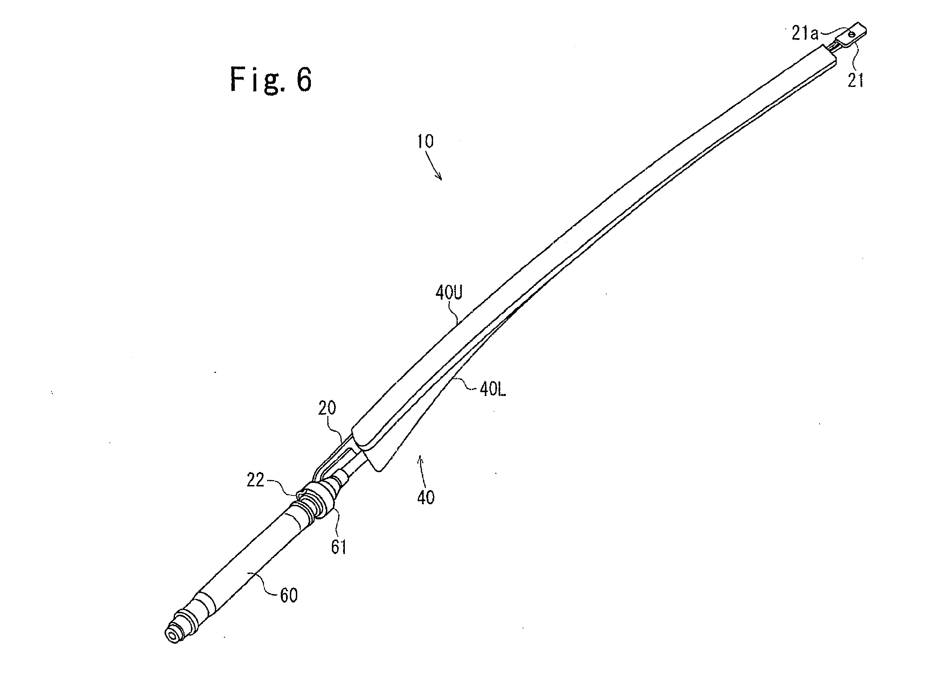

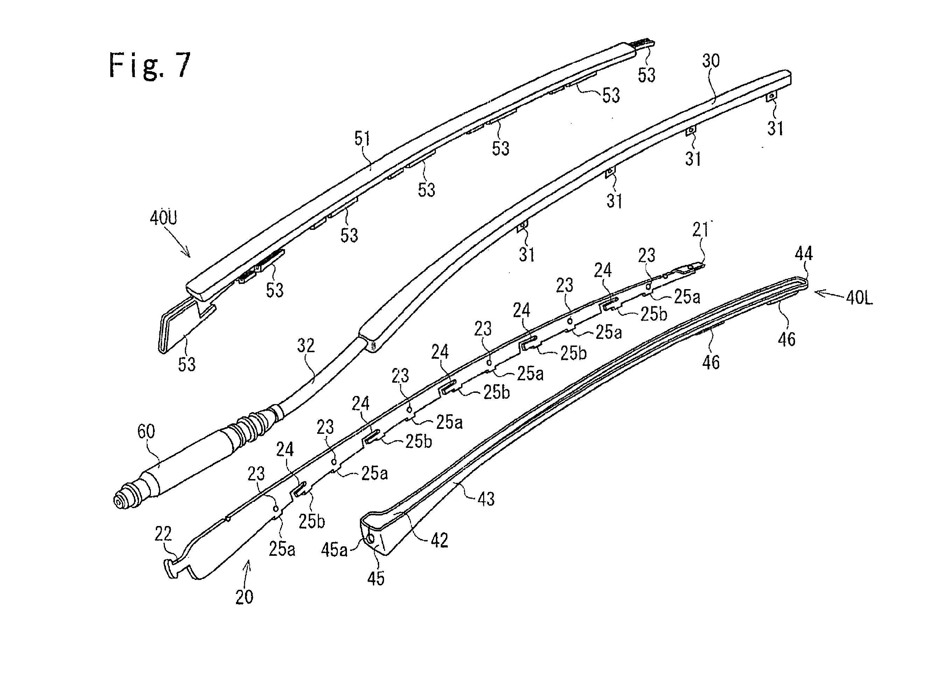

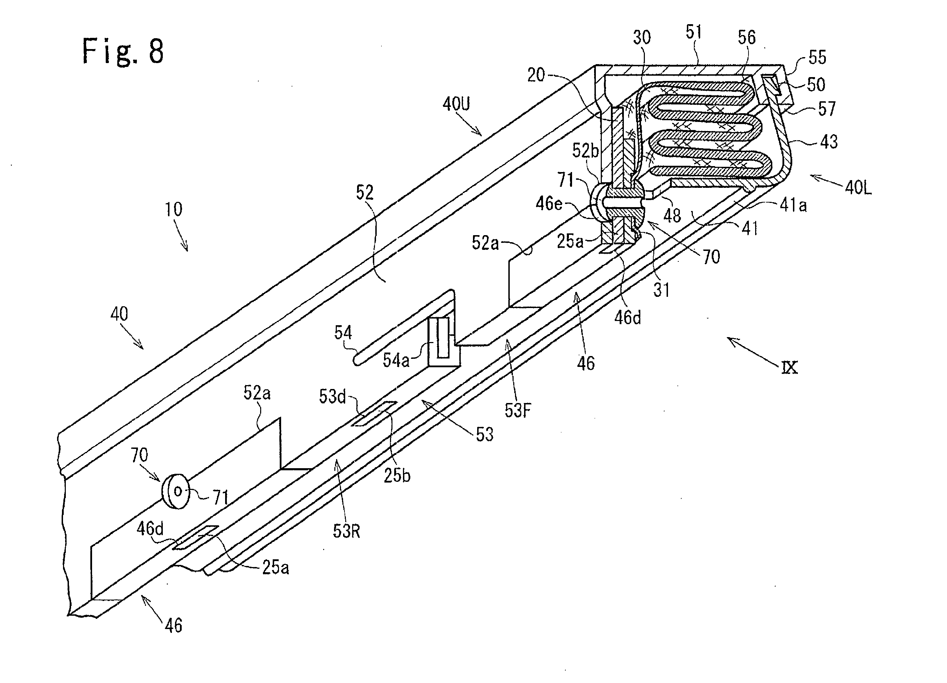

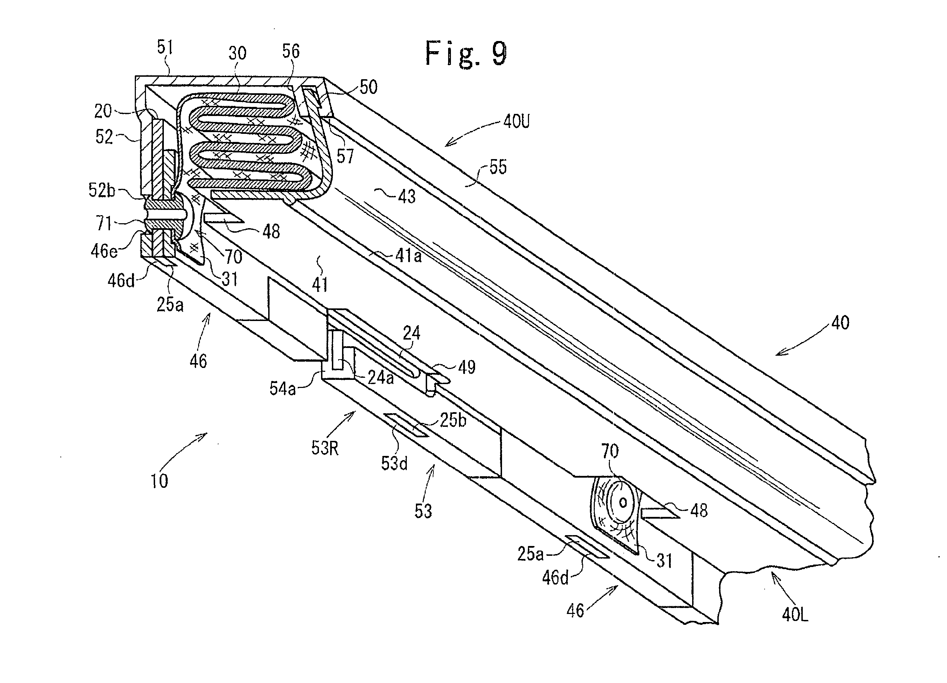

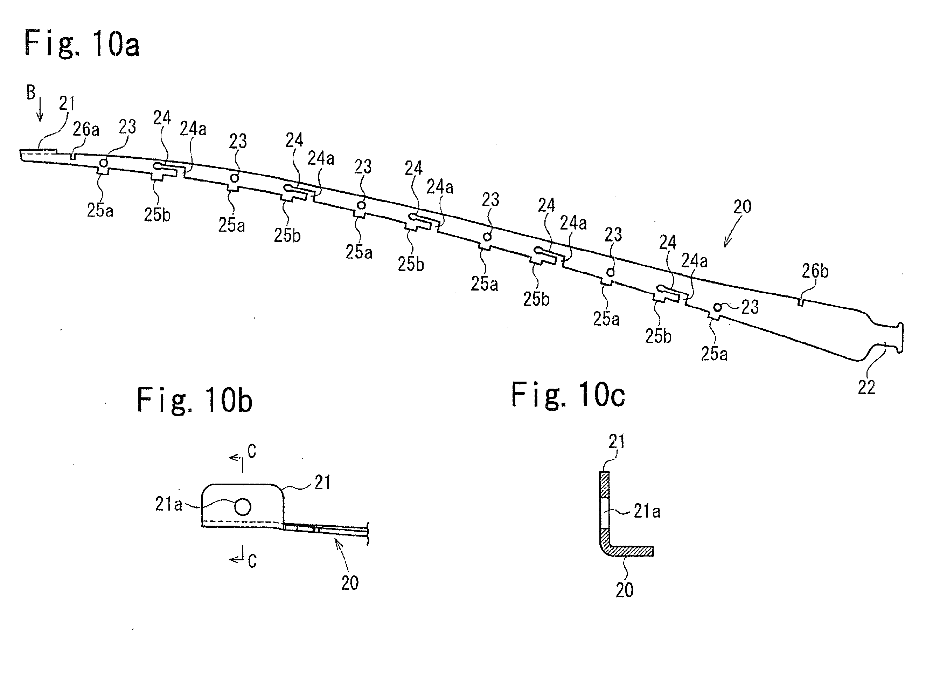

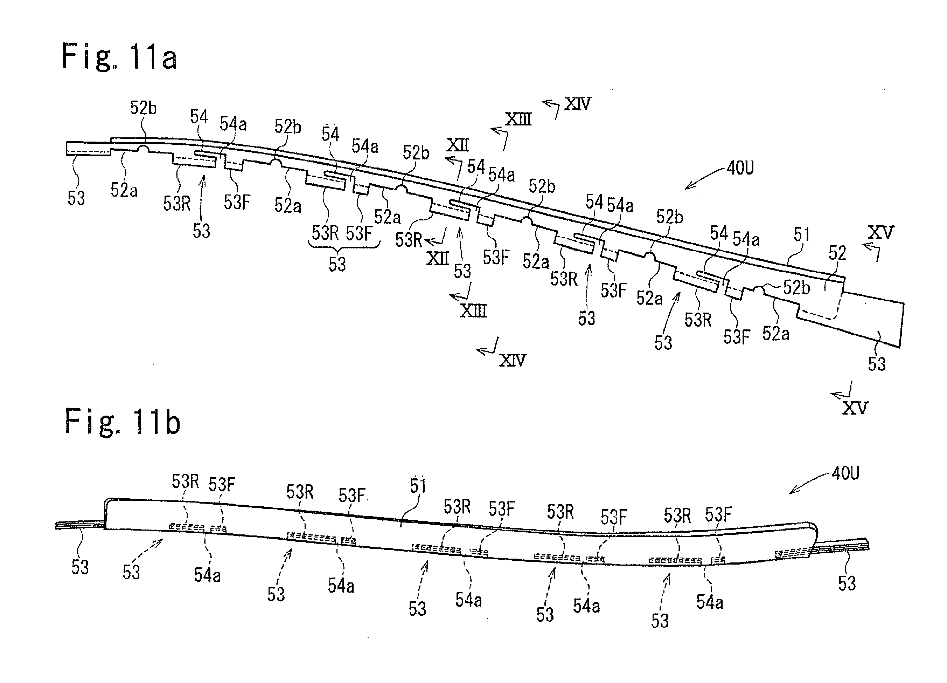

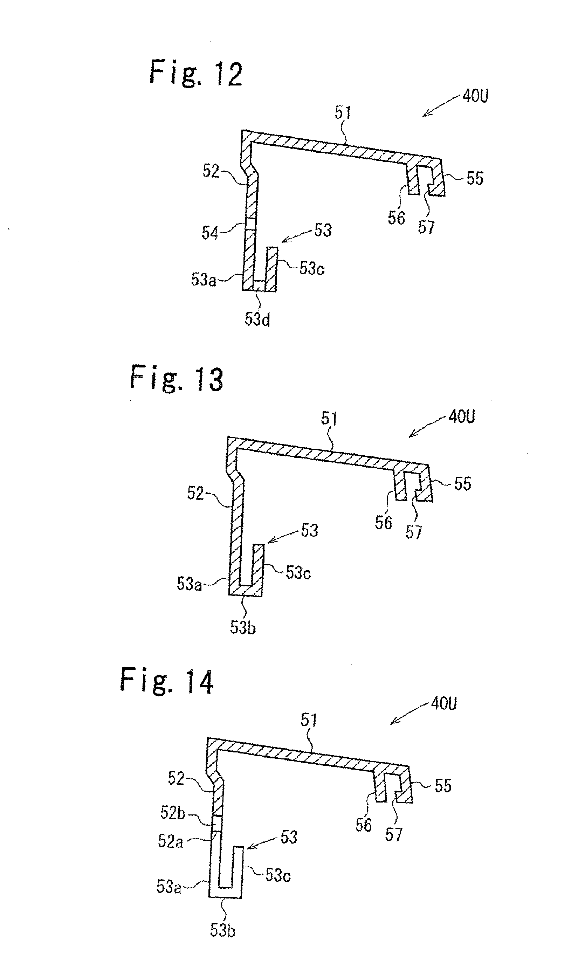

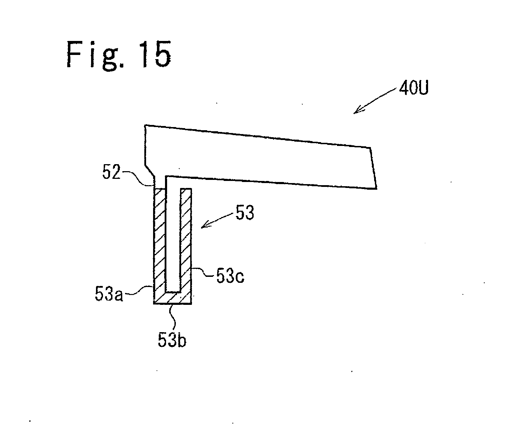

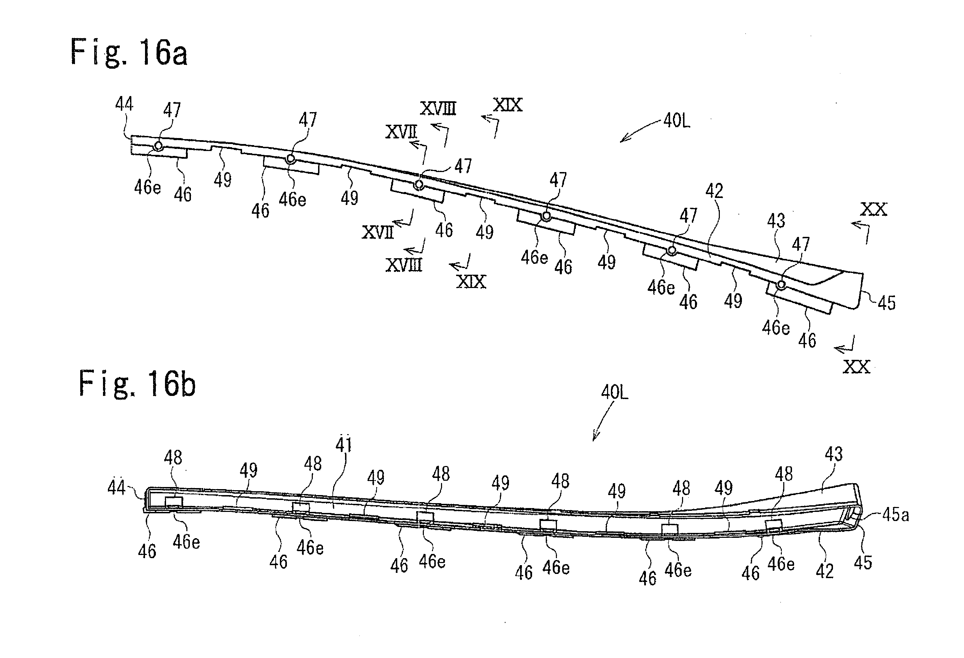

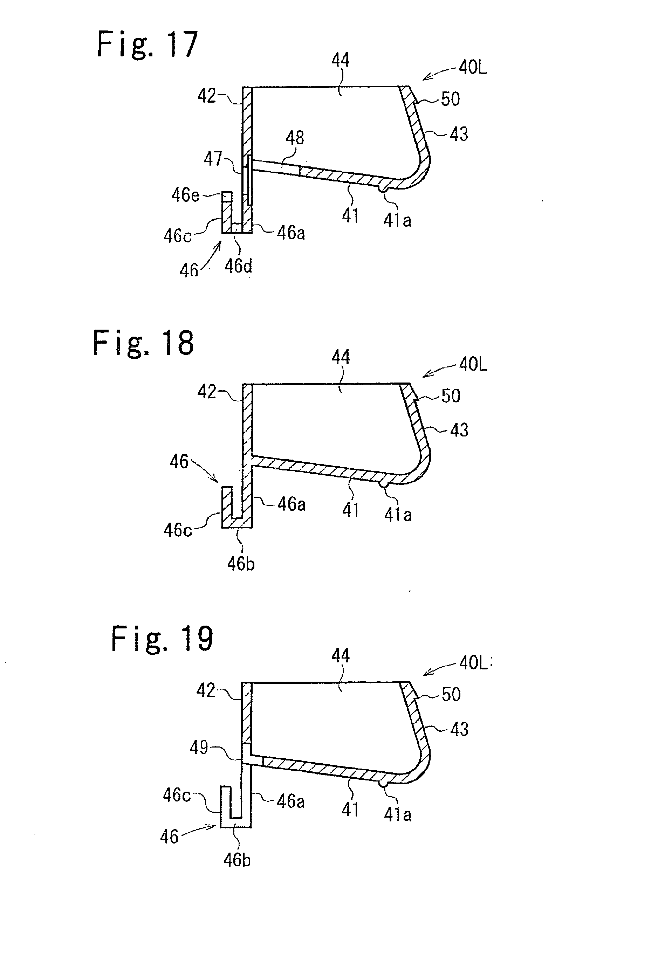

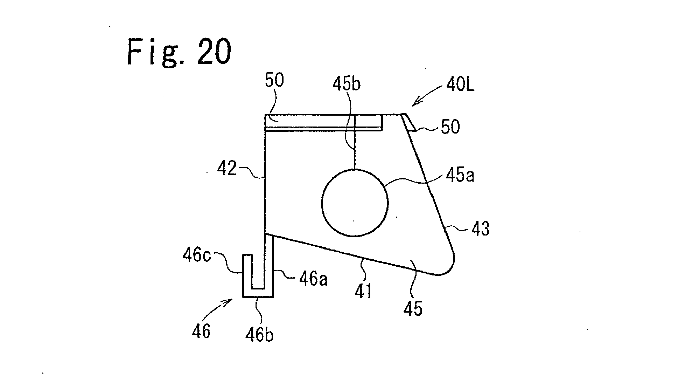

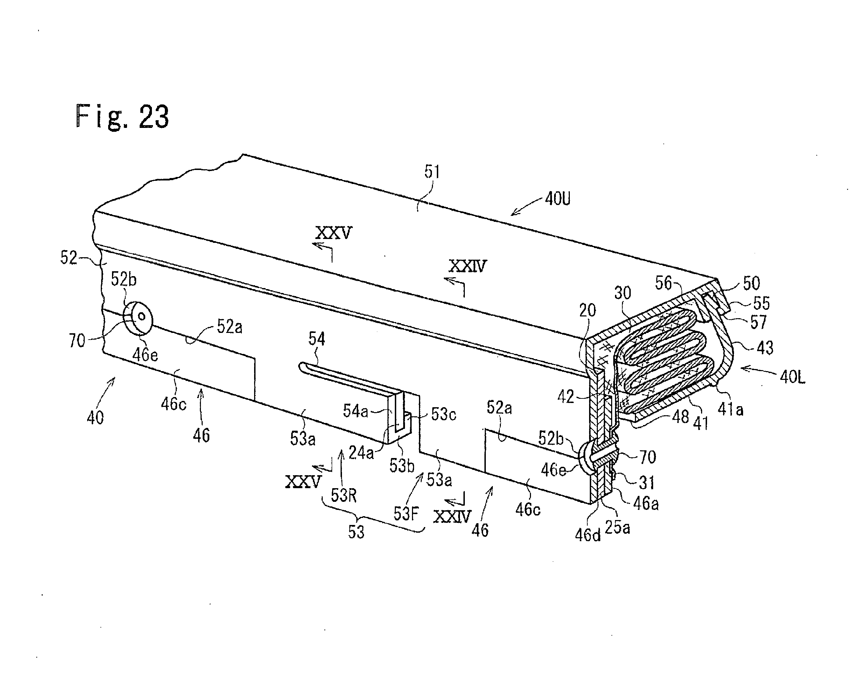

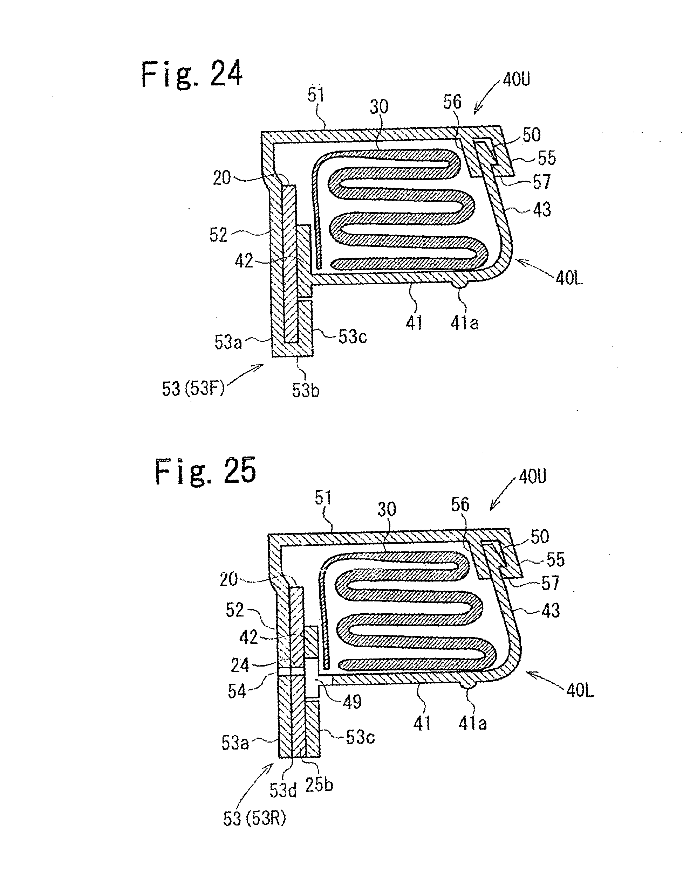

Also, Figs. 5 and 6 are perspective views of the air bag device for pedestrian mounted on this automobile, Fig. 7 is an exploded perspective view of the air bag device for pedestrian, Figs. 8 and 9 are sectional perspective views along VIII-VIII line in Fig. 5, Figs. 10A to 10C are configuration diagrams of a base plate of the air bag device for pedestrian, Figs. 11A and 11B are configuration diagrams of the upper cover of the air bag device for pedestrian, Figs. 12, 13, 14, and 15 are sectional views along XII-XII line, XIII-XIII line, XIV-XIV line, and XV-XV line in Fig. 11A, respectively, Figs. 16A and 16B are configuration diagrams of the loser cover of the air bag device for pedestrian, Figs. 17, 18, and 19 are sectional views along XVII-XVII line, XVIII-XVIII line, and XIX-XIX line in Fig. 16A, respectively, Fig. 20 is an end face view along XX-XX line in Fig. 16A, Figs. 21, 22, and 23 are exploded perspective views illustrating assembling procedures of the air bag device for pedestrian, and Figs. 24 and 25 are sectional views along XXIV-XXIV line and XXV-XXV line in Fig. 23, respectively.

Fig. 6 is a perspective view seen from the VI direction in Fig. 5, and Fig. 9 is a sectional perspective view seen from the IX direction in Fig. 8. Fig. 10A is a side view of the base plate, Fig. 10B is a top view of a B portion in Fig. 10A, and Fig. 10C is a sectional view along C-C line in Fig. 10B. Fig. 11A is a side view of the upper cover, and Fig. 11B is a top view of the upper cover. Fig. 16A is a side view of the lower cover, and Fig. 16B is a top view of the lower cover.

In the following explanation, a fore-and-aft direction, a right-and-left direction, and a vertical direction match a fore-and-aft direction, a right-and-left direction (car-body width direction), and a vertical direction of a car body in a state in which the air bag device for pedestrian is installed on the car body of an automobile.

As shown in Figs. 2 to 4, in this embodiment, an A-pillar 2 is provided with an A-pillar main body 2a and a pillar outer 2b arranged on an outer face of the A-pillar main body 2a.

In this embodiment, an air bag device 10 for pedestrian is arranged along a side face on a wind shield 4 side of the pillar outer 2b of this A-pillar 2. This air bag device 10 for pedestrian includes a base plate 20 extending in the car-body for-and-aft direction along the side face on the wind shield 4 side of the pillar outer 2b, a folded body of an air bag 30 arranged along the base plate 20, a cover 40 covering the folded body of the air bag 30, an inflator 60 connected to a front end of the air bag 30 through a duct 32 and the like. The cover 40 includes a lower cover 40L covering the lower side of the folded body of the air bag 30 and an upper cover 40U covering an upper side of the folded body of the air bag 30.

As shown in Figs. 10A to 10C, in this embodiment, the base plate 20 is in an elongate band state. For this base plate 20, its longitudinal direction is referred to as a substantially fore-and-aft direction and the plate is arranged so that its plate face opposes the side face of the wind shield 4 side of the pillar outer 2b. In Fig. 10A, the left end side of this base plate 20 is a rear end side when being installed on the car body, while the right end side is a front end side when being installed on the car body.

The base plate 20 is made of metal plate in this embodiment, but a material of the base plate 20 is not limited to that.

On the rear end side of the base plate 20, an anchor portion 21 for mounting on a roof side rail 3 of a car body 1 is provided. In this embodiment, the anchor portion 21 is made by a projecting piece bent in the substantially L-shape from an upper edge portion of the base plate 20 toward the side. Reference numeral 21a denotes an insertion hole provided in this anchor portion 21 through which a fastener such as a bolt, rivet or the like is to be inserted.

On the front end side of the base plate 20, an inflator fixing portion 22 is provided. In this embodiment, the inflator fixing portion 22 forms constriction in the vicinity of the front end of the base plate 20 by cutting away an upper edge and a lower edge of the base plate 20, respectively, as shown in Fig. 10A, so that a band 61, which will be described later, can be hooked by this constriction.

As shown in Fig. 10A, in a middle portion in the longitudinal direction of the base plate 20, a plurality (6 pieces in this embodiment) of rivet insertion holes 23 through which a rivet 70 as a fastener for fixing the lower cover 40L to the base plate 20 is inserted and a plurality (5 pieces in this embodiment) of slits 24 into which a locking piece 6, which will be described later, is to be inserted are provided so as to penetrate a plate face of the base plate 20. In this embodiment, the rivet insertion holes 23 and the slits 24 are alternately arranged in the longitudinal direction of the base plate 20 with a predetermined interval, respectively. However, the number and arrangement of the rivet insertion holes 23 and the slits 24 are not limited to that. For example, the rivet insertion holes 23 and the slits 24 do not have to be arranged alternately and the numbers of the both may be different. For example, the arrangement may be such that the slit 24, the slit 24, the rivet insertion hole 23, the slit 24, and the slit 24.

In this embodiment, a notch portion 24a is formed from the lower edge of the base plate 20 toward the front end side of each slit 24 as shown in Fig. 10A, and the front end side of each slit 24 communicates with the lower edge of the base plate 20 through this notch portion 24a.

On the lower edge of the base plate 20, a plurality (6 pieces in this embodiment) of locking pieces 25a to be engaged with a slit 46d of each locking portion 46 on the lower cover 40L, which will be described later, and a plurality (5 pieces in this embodiment) of locking pieces 25b to be engaged with a slit 53d of each locking portion 53 on the upper cover 40U are provided. As shown in Fig. 10A, in this embodiment, each of the locking pieces 25a and 25b is made by a claw-like projecting piece projected downward from the lower edge of the base plate 20. These locking pieces 25a and 25b are alternately arranged in the longitudinal direction of the base plate 20 with a predetermined interval.

In this embodiment, each locking piece 25a is arranged in the vicinity of immediately below each rivet insertion hole 23, and each locking piece 25b is arranged below the vicinity of the rear end portion of each slit 24. However, the number and arrangement of the locking pieces 25a and 25b are not limited to that.

At a position in the middle of the rivet insertion hole 23 and the anchor portion 21 arranged on the rearmost end side of the base plate 20 on the upper edge of the base plate 20, a recess portion 26a with which a rear edge of the upper cover 40U is engaged is provided. Also, at a position in the middle of the rivet insertion hole 23 and the inflator fixing portion 22 arranged on the foremost end side of the base plate 20 on the upper edge of the base plate 20, a recess portion 26b with which a front edge of the upper cover 40U is engaged is provided. In this embodiment, the length between the recess portions 26a and 26b in the base plate 20 is substantially equal to the length of the A-pillar 2.

The air bag 30 is in a tube state inflatable along the A-pillar 2. The length of the air bag 30 when being inflated is preferably longer than the length of the A-pillar 2 and a length that can cover up to the vicinity of a front hood range of the A-pillar 2. However, the length of the air bag 30 when being inflated is not limited to that. As shown in Fig. 7, the air bag 30 is folded in an elongate form in the fore-and-aft direction in a normal time, that is, when the air bag is not inflated. From the lower edge of the air bag 30, the same number (that is, 6 pieces in this embodiment) of ear-like mounting pieces 31 as that of the rivet insertion holes 23 are projected in a positional relationship such that they are overlapped with the rivet insertion holes 23 when the folded body of the air bag 30 is arranged along the base plate 20. A rivet insertion hole 31a to be overlapped with the rivet insertion hole 23 is provided at each mounting piece 31.

From the front end of the air bag 30, a duct 32 for introducing gas is extended. At the distal end of the duct 32, an inflator 60 is connected.

The cover 40 works also as a molding between the pillar outer 2b of the A-pillar 2 and the wind shield 4 in this embodiment and it is arranged at the intersection corner portion between the side face of the pillar outer 2b on the wind shield 4 side and the front face of the wind shield 4 as shown in Fig. 2. The cover 40, that is, the lower cover 40L and the upper cover 40U are made of rubber similar to a normal molding or a soft synthetic resin and a hard resin constituting a design. However, the material of the cover 40 is not limited to that. Also, the lower cover 40L and the upper cover 40U may be made of different materials.

In this embodiment, an upper face of the cover 40 (a main plate portion 51 of the upper cover 40U, which will be described later) is continued to an outer face of the pillar outer 2b substantially in a flush state, but not limited to that, and the upper face of the cover 40 may be retreated from the outer face of the pillar outer 2b or may be protruded.

The lower cover 40L is in an elongate housing state extending in the car-body fore-and-aft direction along the side face of the pillar outer 2b on the wind shield 4 side. The folded body of the air bag 30 is housed in this lower cover 40L. As shown in Figs. 16A, 16B and 2, the lower cover 40L has a bottom plate portion 41 overlapped with the front face of the wind shield 4, side walls 42 and 43 rising from the side edges of the A-pillar 2 side and the side opposite the A-pillar 2 of the bottom plate portion 41, respectively, and end walls 44 and 45 rising from the rear end and the front end of the bottom plate portion 41, respectively, and its upper face is opened.

On the outer side face of the side wall 42 on the A-pillar 2 side of the lower cover 40L, that is, along the face of the lower cover 40L oriented outward, the base plate 20 is arranged.

From the side edge on the A-pillar 2 side of the lower face of the bottom plate portion 41, a plurality of falling pieces 46a falling downward are projected. As shown in Fig. 16A, in this embodiment, six falling pieces 46a are provided in the longitudinal direction of the lower cover 40L with a predetermined interval, and each falling piece 46a is arranged in a positional relationship such that the vicinity of the middle of each in the longitudinal direction substantially matches an arrangement position of each rivet insertion hole of the base plate 20.

As shown in Fig. 18, each falling piece 46a is formed by partially extending the side wall 42 downward and its face on the A-pillar 2 side is continued to the outer side face of the side wall 42 in a flush state and the face opposite the A-pillar 2 is continued to the inner side face of the side wall 42 through an opening 48, which will be described later, that is, the face oriented inward of the lower cover 40L in a flush state.

From the lower edge of each falling piece 46a, an extending piece 46b extending toward the A-pillar 2 side is projected. Also, from the edge portion of the extending piece 46b on the A-pillar 2 side, a rising piece 46c rising upward is installed. An interval between the rising piece 46c and the falling piece 46a is substantially equal to the thickness of the base plate 20, and the lower edge of the base plate 20 is engaged between them. That is, in this embodiment, the locking portion 46 to be locked by the lower edge of the base plate 20 is constructed by the falling piece 46a, the extending piece 46, and the rising piece 46c.

In this embodiment, on the extending piece 46b of each locking portion 46, a slit 46d to be engaged with the locking piece 25a protruding downward from the lower edge of the base plate 20 is provided.

In the continuous face between the side wall 42 and the falling piece 46a, at a position opposed to each rivet insertion hole 23 of the base plate 20 in a state where the lower edge of the base plate 20 is engaged with each locking portion 46, a rivet insertion hole 47 overlapped with the rivet insertion hole 23 is provided, respectively. Also, as shown in Fig. 16B, at a position facing the rivet insertion hole 47 in the bottom plate portion 41, the opening 48 through which each mounting piece 31 of the air bag 30 is pulled is provided, respectively. As shown in the figure, each opening 48 is formed so as to be brought into contact with the inner side face of the side wall 42.

In this embodiment, in the upper edge of the rising piece 46c of each locking portion 46, at a position opposed to each rivet insertion hole 47, a substantially semi-circular notch 46e is formed concentrically with each rivet insertion hole 47. A diameter of this semi-circular notch 46e is larger than a diameter of a head portion 71 of a rivet 70.

In the side wall 42, at a position opposed to each slit 24 of the base plate 20 in a state where the base plate 20 is engaged with each locking portion 46, a slit 49 overlapped with the slit 24 is provided, respectively. In this embodiment, each slit 49 is formed so as to cut away the intersection corner portion between the lower edge of the side wall 42 and the edge portion of the bottom plate portion 41 on the A-pillar 2 side.

As shown in Figs. 17 to 20, on the upper edge of the side wall 43 on the side opposite the A-pillar 2 and the upper end of each of the end walls 44 and 45, a claw-like engagement portion 50 extending sideward is provided, respectively.

As shown in Fig. 20, on the end wall 45 on the front end side of the lower cover 40L, an opening 45a through which the duct 32 connecting the air bag 30 to the inflator 60 is inserted is provided. In this embodiment, from the upper edge of the end wall 45 to the opening 45a, a notch 45b for having the duct 32 enter into the opening 45a is provided.

Reference numeral 41a denotes a lip portion extended along the peripheral edge on the lower face of the bottom plate portion 41. As shown in Fig. 2, if the lower cover 40L is arranged along the front face of the wind shield 4, this lip portion 41a is brought into close contact with the wind shield 4.

The upper cover 40U has a main plate portion 51 covering the upper face of the lower cover 40L, a leg-like piece 52 falling downward from the edge portion of the main plate portion 51 on the A-pillar 2 side and the like.

The upper cover 40U is arranged on the base plate 20 arranged along the side wall 42 of the lower cover 40L particularly on the A-pillar 2 side so that the leg-like piece 52 is overlapped with.

As shown in Fig. 11A, in the lower edge of the leg-like piece 52, at a position overlapped with the rising piece 46c of each locking portion 46 of the lower cover 40L, a recess portion 52a to be engaged with the rising piece 46c is provided, respectively. Also, at a position opposed to the notch 46e on the upper edge of the rising piece 46c in the upper edge of each recess portion 52a, a substantially semi-circular notch 52b forming a pair with the notch 46e is provided. A diameter of the notch 52b is also larger than the diameter of the head portion 71 of the rivet 70. When each rising piece 46c is engaged with each recess portion 52a, the semi-circular notches 46e and 52b are integrated, and a circular opening with a diameter larger than the head portion 71 of the rivet 70 is formed. concentrically with each rivet insertion hole 23 of the base plate 20.

In the leg-like piece 52, a portion between the adjacent recess portions 52a and 52a forms a falling piece 53a falling downward along the base plate 20, respectively. A lower end of each falling piece 53a is, in a state where each locking portion 46 of the lower cover 40L is engaged with each recess portion 52a, located at substantially the same height as the lower end of the falling piece 46a of each locking portion 46. From the lower end of each falling piece 53a, an extending piece 53b is projected so as to extend to the lower side of the base plate 20, and from the edge portion on the distal end side in the extending direction of the extending piece 53b, the rising piece 53c rising along the face of the base plate 20 on the lower cover 40L side is installed upright.

That is, by means of the falling piece 53a, the extending piece 53b, and the rising piece 53c, the locking portion 53 to the lower edge of the base plate 20 is also formed on the upper cover 40U similarly to each locking portion 46 of the lower cover 40L.

In the extending piece 53b of each locking portion 53, the slit 53d with which the locking piece 25b protruding downward from the lower edge of the base plate 20 is provided.

In the leg-like piece 52, in a state where the lower edge of the base plate 20 is engaged with each locking portion 53, at a position opposed to each slit 24 of the base plate 20, a slit 54 to be overlapped with the slit 24 is provided, respectively.

Also, a notch portion 54a is formed toward the front end side of each slit 54 from the lower edge of the falling piece 53a of each locking portion 53 so that it is overlapped with each notch portion 24a of the base plate 20. This notch portion 54a continues to the extending piece 53b and the rising piece 53c of each locking portion 53, and each locking portion 53 is separated to two parts, that is, a front half side 53F and a rear half side 53R by the notch portion 54a.

With the front half side 53F of each locking portion 53, the lower edge on the front side from the notch portion 24a of the base plate 20 is engaged, while with the rear half side 53R, the lower edge on the rear side from the notch portion 24a of the base plate 20 is engaged. The slit 53d is provided on the extending piece 53b of the rear half side 53R.

Along the edge portion of the main plate portion 51 on the side opposite the A-pillar 2 and the both edge portions on the front end side and the rear end side, an extending portion 55 extending downward so that it is overlapped with the outer side face of the side wall 43 of the lower cover 40L and the outer side faces of the end walls 44 and 45, respectively, is formed. This extending piece 55 is continuously extended from the front end edge of the main plate portion 51 to the rear end edge of the main plate portion 51 through the edge portion of the main plate portion 51 on the side opposite the A-pillar 2. Both end sides of the extending piece 55 in the extending direction continue to the front edge and the rear edge of the leg-like piece 52, respectively.

On an opposing face of the extending piece 55 to the side wall 43 and the end walls 44 and 45, a projecting band 57 capable of elastic engagement with the claw-live engagement portion 50 provided on the upper edge of the side wall 43 and the end walls 44 and 45 is provided.

In the main plate portion 51, from the center side of the main plate portion 51 from the extending piece 55, a falling wall 56 falling downward so that it is overlapped with the inner side face of the side wall 43 and the inner side faces of the end walls 44 and 45 of the lower cover 40L, respectively, is projected. The falling wall 56 is extended substantially in parallel with the extending piece 55.

The inflator 60 is in a rod state as shown in Figs. 5 to 7 in this embodiment, in which a gas injection port (not shown) is provided on one end side in the longitudinal direction, while an initiator (reference numeral omitted) is provided on the other end side. The inflator 60 is arranged along the inflator fixing portion 22 on the front end side of the base plate 20 with the longitudinal direction in the car-body fore-and-aft direction and in an attitude with the gas injection port directed toward the car-body rear side and is fixed by a band 61 so as to be bound to the inflator fixing portion 22.

Though not shown, the inflator 60 is equipped with a bracket for fixing the inflator 60 to a hood ridge 5 of the car body 1.

Subsequently, assembling procedures of the air bag device 10 for pedestrian will be described.

First, as shown in Fig. 7, the air bag 30 is folded in an elongate way in the fore-and-aft direction, and the inflator 60 is connected to the duct 32 on the front end side of the folded body. The folded body of the air bag 30 is usually in a state in which the shape is held by a shape holding material (not shown) attached so as to surround the periphery. The shape holding material is broken or torn when the air bag 30 is inflated.

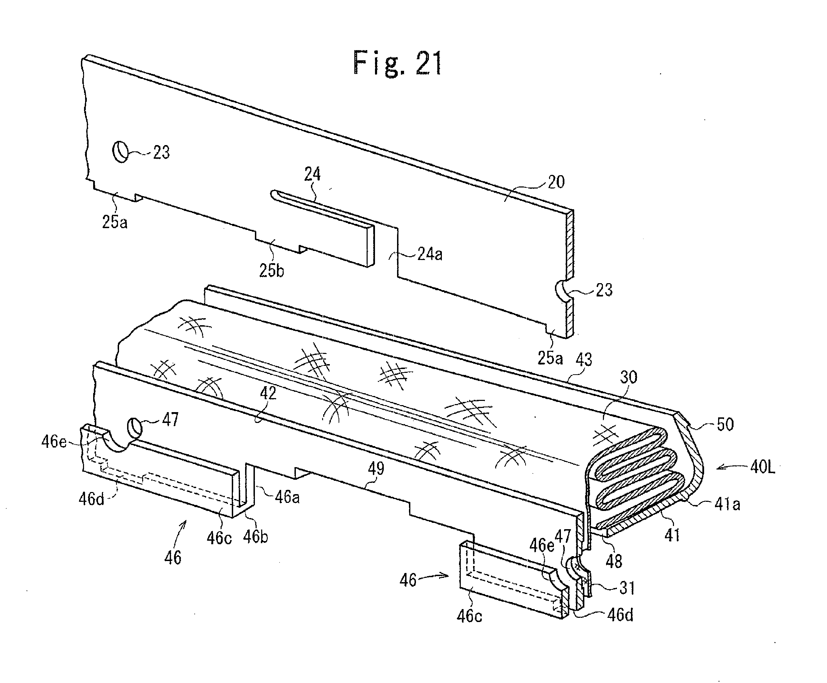

Subsequently, as shown in Fig. 21, the folded body of the air bag 30 is arranged in the lower cover 40L. At this time, each mounting piece 31 of the air bag 30 is inserted through each opening 48 on the bottom portion of the lower cover 40L and pulled out below the lower cover 40L. Also, the notch 45b on the end wall 45 on the front end side of the lower cover 40L is pushed open, and the duct 32 is made to enter into the opening 45a of the end wall 45.

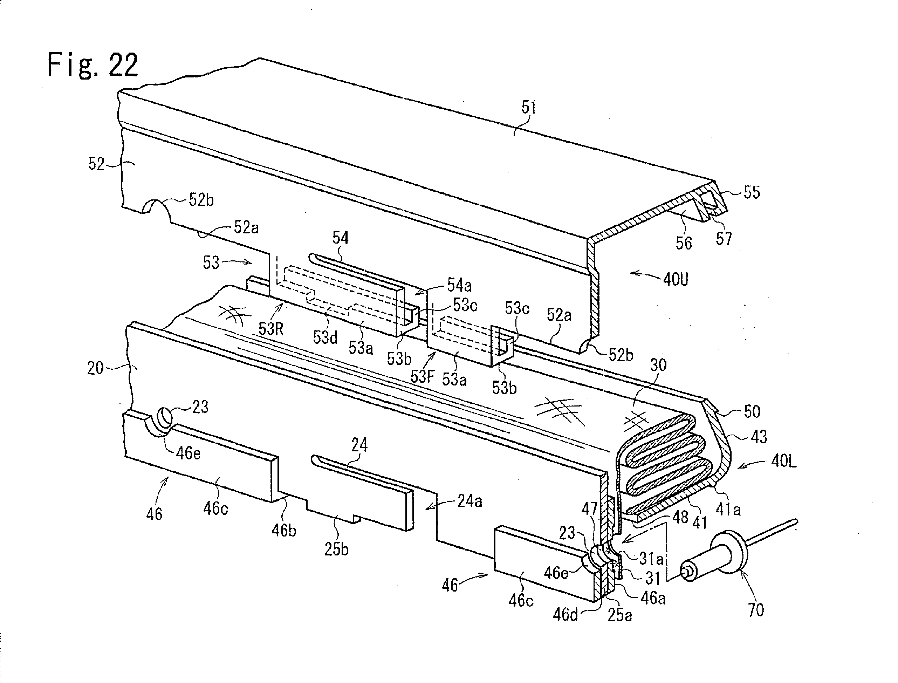

Also, as shown in Figs. 21 and 22, the base plate 20 is arranged along the outer side face of the side wall 42 of the lower cover 40L, and its lower edge is engaged with each locking portion 46. At this time, each locking piece 25a on the lower edge of the base plate 20 is engaged with the slit 46d of each locking portion 46.

Then, the inflator 60 is fixed to the inflator fixing portion 22 of the base plate 20 with the band 61.

The base plate 20 may be set on the lower cover 40L before the air bag 30 is arranged in the lower cover 40L.

After that, each mounting piece 31 of the air bag 30 pulled out of each opening 48 to below the lower cover 40L is overlapped with each rivet insertion hole 47 of the lower cover 40L, the rivet 70 is inserted through the rivet insertion holes 31a, 47 and 23 of the mounting pieces 31 overlapped with each other, the lower cover 40L, and the base plate 20, and the rivet 70 is swaged by a riveter (not shown). As a result, each mounting piece 31 of the air bag 30 and the lower cover 40L are fixed to the base plate 20 by the rivet 70.

Subsequently, the upper cover 40U is attached to the lower cover 40L by overlapping the leg-like piece 52 on the outside of the base plate 20 and by placing the main plate portion 51 over the lower cover 40L. At this time, each locking portion 46 of the lower cover 40L is engaged with the recess portion 52a between the locking portions 53 and 53 of the upper cover 40U, and each locking portion 53 of the upper cover 40U is engaged with the lower edge of the base place 20 between the locking portions 46 and 46 of the lower cover 40L. At this time, each locking piece 25b on the lower edge of the base plate 20 is engaged with the slid 53d of each locking portion 53.

It may be so configured that each locking portion 53 is hooked by the lower edge of the base plate 20, first, and then, the leg-like piece 52 is placed along the outside of the base plate 20 or that the leg-like piece 52 is overlapped on the outside of the base plate 20 first and then, each locking portion 53 is engaged with the lower edge of the base plate 20 by pulling each locking potion 53 downward.

Subsequently, the upper edges of the side wall 43 and the end walls 44 and 45 of the lower cover 40L are pushed in between the extending portion 55 and the falling wall 56 around the main plate portion 51, and the engaging portion 50 of the side wall 44 and each end wall is elastically engaged with the projecting band 57 on the back side of the extending portion 55 so as to fix the main plate portion 51 to the lower cover 40L. At this time, the rear end edge of the main plate portion 51 is engaged with the recess portion 26a on the upper edge on the rear end side of the base plate 20, and the front end edge of the main plate portion 51 is engaged with the recess portion 26b on the upper edge on the front end side of the base plate 20.

As a result, the folded body of the air bag 30 is brought into a state covered by the cover 40 made up of the lower cover 40L and the upper cover 40U. In this state, the rear end side of the base plate 20 including the anchor portion 21 extends rearward from the rear end of the cover 40, while the front end side of the base plate 20 including the inflator fixing portion 22 extends frontward from the front end of the cover 40.

As a result, the air bag device 10 for pedestrian shown in Figs. 5 and 6 are constituted.

In this embodiment, as shown in Fig. 2, the circular opening concentric with each rivet insertion hole 23 of the base plate 20 formed by integrating each notch 46e of the lower cover 40L and each notch 52b of the upper cover 40U has a diameter larger than that of the head portion 71 of the rivet 70, respectively. Therefore, depending on the rivet 70, the upper cover 40U is not fixed to the base plate 20.

However, it may be so configured that the opening made up of the notches 46e and 52b has a diameter smaller than that of the head portion 71 of the rivet 70, and the upper cover 40U is fixed to the base plate 20 by this rivet 70. Alternatively, the upper cover 40U may be separately fixed to the base plate 20 by a fastener such as another rivet different from them.

The air bag device 10 for pedestrian is assembled in advance as above and shipped in a unitized state.

This unitized air bag device 10 for pedestrian is carried in an automobile assembling plant and mounted to the car body 1. As described above, the cover 40 of the air bag device 10 for pedestrian also works as a molding between the pillar outer 2b of the A-pillar 2 and the wind shield 4.
This cover 40 is disposed at the intersection corner portion between the side face of the pillar outer 2b on the wind shield 4 side and the front face of the wind shield 4 with the longitudinal direction in the car-body fore-and-aft direction.

In this embodiment, as shown in Fig. 3, from a region to be opposed to each slit 54 of the cover 40 (upper cover 40U) in the side face of the pillar outer 2b on the wind shield 4 side, the locking piece 6 is projected toward the air bag device 10 side for pedestrian, respectively. If the air bag device 10 for pedestrian is to be installed in the car body 1, each locking piece 6 is inserted into each slit 54 of the cover 40. The locking piece 6 enters into the slit 24 of the base plate 20 (and the split 49 of the lower cover 40L) through the slit 54. As a result, the air bag device 10 for pedestrian is locked at a predetermined mounting position.

In the air bag device 10 for pedestrian, the entire length of the cover 40 is substantially equal to the entire length of the A-pillar 2, and the cover 40 extends from the upper end to the lower end of the A-pillar 2. The anchor portion 21 on the rear end side of the base plate 20 extending rearward from the rear end of the cover 40 is overlapped in the vicinity of the front end of the roof side rail 3 of the car body 1 continuing to the rear end of the A-pillar 2. Also, the inflator 60 fixed to the inflator fixing portion 22 extending frontward from the front end of the cover 40 is arranged in the vicinity of the rear end of the hood ridge 5 of the car body 1 continuing to the front end of the A-pillar 2.

After that, the anchor portion 21 is fixed to the roof side rail 3 by a fitting (not shown) such as a bolt or rivet and the inflator 60 is fixed to the hood ridge 5 through its bracket so that the mounting work of the air bag device 10 for pedestrian is completed:

After that, to the initiator of the inflator 60, a harness for electricity (not shown) from an inflator control circuit (not shown) of the car body 1 is connected.

In the automobile with the air bag device 10 for pedestrian, the air bag device 10 for pedestrian is arranged at the intersection corner portion between the pillar outer 2b of the A-pillar 2 and the wind shield 4, and the cover 40 of the air bag device 10 for pedestrian covers the front face side on the side edge of the wind shield 4, and thus, there is no need to provide a molding at this intersection corner portion. Also, as a result, the automobile with the air bag device 10 for pedestrian is easy to be assembled.

In the automobile with air bag device 10 for pedestrian, design freedom of the A-pillar 2 is also high.

In this embodiment, since the cover 40 extends from the upper end to the lower end of the A-pillar 2, that is, from the upper end to the lower end of the side edge of the wind shield 4, there is no need to provide a molding substantially over the entire side edge of the wind shield 4. Also, since the side edge of the wind shield 4 is continuously covered by the cover 40 from the upper end to the lower end, appearance is favorable.

In this embodiment, the cover 40 is provided with the lower cover 40L covering the lower side of the folded body of the air bag 30 and the upper cover 40U covering the upper side of the folded body of the air bag 30, and the edge portion of the main plate portion 51 on the side opposite the A-pillar 2 and the front end edge and the rear end edge in the upper cover 40U are engaged with the upper edge of the side wall 43 and the upper edges of the end walls 44 and 45 in the lower cover 40L, respectively. Therefore, in the cover 40, the joint between the lower cover 40L and the upper cover 40U is difficult to be seen from the front, and its appearance is favorable.

In this embodiment, when the air bag device 10 for pedestrian is arranged along the A-pillar 2, by inserting the locking pieces 6 extending from the A-pillar 2 into the slits 54, 24 and 49, the air bag device 10 for pedestrian is temporarily fastened at the predetermined mounting position. In this state, the anchor portion 21 on the rear end side of the base plate 20 is fixed to the roof side rail 3 and the inflator 60 fixed to the inflator fixing portion 22 on the front end side can be fixed to the hood ridge 5, and thus, a fixing work of the anchor portion 21 to the roof side rail 3 and a fixing work of the inflator 60 to the hood ridge 5 can be performed easily.

Also, since the air bag device 10 for pedestrian can be locked to the A-pillar 2 by the locking piece 6 as above, it is not necessary to fasten the air bag device 10 for pedestrian to the A-pillar 2 with a bolt / nut, and an assembling work of this air bag device 10 for pedestrian is easy.

An operation of the air bag device 10 for pedestrian is as follows.

Though not shown, in the automobile equipped with the air bag device 10 for pedestrian, various sensors are provided for detecting that the automobile collides against a pedestrian or the like or for predicting a collision between the automobile and a pedestrian or the like. Both the detection sensor and prediction sensor may be provided. The inflator control circuit starts the initiator of the inflator 60 on the basis of detection or prediction signal from these sensors.

Upon start of the initiator, gas is injected out of the inflator 60, and the air bag 30 is inflated by the gas from the inflator 60. By means of an inflation pressure of the air bag 30, the projecting band 57 of the upper cover 40U is removed from the engagement portion 50 of the lower cover 40L. After that, the air bag 30 pushes open the main plate portion 51 of the upper cover 40U and inflates so as to cover the front face of the A-pillar 2 as shown in Fig. 4.

When the air bag 30 is inflated, a force is applied to the covers 40L and 40U in a direction separated from the base plate 20, but in this embodiment, since the covers 40L and 40U have each of the locking portions 46 and 53 engaged with the lower edge of the base plate 20, they can firmly counteract the force in the direction separated from the base plate 20.

Also, in this embodiment, since the plurality of locking portions 46 and 53 are provided on each of the covers 40L and 40U and the locking portions 46 and 53 are engaged with the lower edge of the base plate 20 alternately in the longitudinal direction of the base plate 20, a stress occurring in the covers 40L and 40U by the force in the direction separated from the base plate 20 is widely distributed.

The above embodiment shows an example of the present invention, and the present invention is not limited to the above embodiment.

For example, in the above embodiment, the cover 40 is configured by the lower cover 40L covering the lower side and the upper cover 40U covering the upper side of the folded body of the air bag 30, but the configuration of the cover is not limited to that. For example, the cover may be configured by a left cover covering the left side and a right cover covering the right side of the folded body of the air bag 30 or may be configured by a first cover covering a diagonally lower side and a second cover covering a diagonally upper side opposite thereto of the folded body of the air bag 30.

In the present invention, the configuration of the air bag device for pedestrian is not limited to that of the above embodiment. Also, a fixing method of the air bag device for pedestrian to a car body is arbitrary and is not limited to the configuration of the above embodiment.

In the above embodiment, the air bag device 10 for pedestrian is mounted on the A-pillar 2 on the right side (right side for an occupant) of the car body 1, but it is needless to say that the device can be configured to be mounted on the A-pillar on the left side (left side for the occupant) in the car body 1. In this case, it is only necessary that right and left of the configuration of the air bag device 10 for pedestrian are reversed with respect to the above embodiment.

## Claims

1. An air bag device for pedestrian adapted to be arranged along an A-pillar (2) of a car body and being provided with an air bag (30) folded body, a cover (40) covering the air bag folded body, and an inflator (60) for inflating the air bag,
wherein
the air bag device (10) for pedestrian is adapted to be arranged at an intersection corner portion between the A-pillar (2) of the car body and a wind shield (4), and at least a part of the cover (40) covers a front face side of a side edge of the wind shield (4),
**characterized in that**
the cover (40) is provided with a lower cover (40L) covering a lower side of the air bag folded body and an upper cover (40U) covering an upper side of the air bag folded body;
edge portions of the lower cover (40L) and the upper cover (40U) on the side opposite the A-pillar (2) are engaged so that they can be separated when the air bag (30) is inflated; and
overlapping locking portions (46, 53) of the lower cover (40L) and the upper cover (40U) on the side of the A-pillar (2) are engaged for attaching the lower cover (40L) and the upper cover (40U) together.

2. The air bag device for pedestrian according to claim 1,
wherein
the air bag device for pedestrian is adapted to be arranged at an intersection corner portion between a pillar outer (2b) of the car body and the wind shield (4).

3. The air bag device for pedestrian according to claim 1,
wherein
the cover is adapted to extend from an upper end to a lower end of a side edge of the wind shield (4) of the car body.

4. The air bag device for pedestrian according to any one of claims 1 to 3, wherein
the cover (40) is provided with a base plate (20) arranged between the lower cover (40L) and the upper cover (40U) as an adapter on the side of the intersection corner for attaching the lover cover (40L) and the upper cover (40U) together.

5. The air bag device for pedestrian according to any one of claims 1 to 4, wherein
the lower cover (40L) is adapted for housing the folded airbag body and comprises:
a bottom plate portion (41) which is adapted to overlap with the front face of the wind shield,
side walls (42, 43) rising from side edges of the bottom plate portion (41) on the A-pillar side and on the side opposite the A-pillar, respectively, and
end walls (44) rising from the rear end and the front end of the bottom plate portion (41), respectively.

6. An automobile with air bag device (10) for pedestrian, wherein the air bag device (10) is as claimed in any one of claims 1 to 5, and
the air bag device (10) for pedestrian is arranged along an A-pillar (2) of a car body at an intersection corner portion between the A-pillar of the car body and a wind shield (4), and at least a part of the cover covers a front face side of a side edge of the wind shield.

7. The automobile with air bag device for pedestrian according to claim 6, wherein
the A-pillar is provided with an A-pillar main body (2a) and a pillar outer (2b) arranged on an outer face of the A-pillar main body; and
said air bag device (10) for pedestrian is arranged at an intersection corner portion between the pillar outer and the wind shield.

8. An automobile with air bag device for pedestrian according to claim 1, wherein
the cover (40) extends from an upper end to a lower end of a side edge of the wind shield.

## Patentansprüche

1. Airbagvorrichtung zum Schutz von Fußgängern, die entlang einer A-Säule (2) der Fahrzeugkarosserie angebracht werden kann und einen gefalteten Airbagkörper (30), eine Abdeckung (40) zum Abdecken des gefalteten Airbagkörpers und einen Gasgenerator (60) zum Aufblasen des Airbags aufweist, wobei
die Airbagvorrichtung (10) zum Schutz von Fußgängern in einem eine Schnittstelle bildenden Eckbereich zwischen der A-Säule (2) der Fahrzeugkarosserie und einer Windschutzscheibe (4) angeordnet werden kann, und mindestens ein Teil der Abdeckung (40) eine Frontflächenseite einer Seitenkante der Windschutzscheibe (4) überdeckt,
**dadurch gekennzeichnet, dass**
die Abdeckung (40) eine untere Abdeckung (40L) zum Abdecken einer Unterseite des gefalteten Airbagkörpers und eine obere Abdeckung (40U) zum Abdecken einer Oberseite des gefalteten Airbagkörpers aufweist;
Eckabschnitte der unteren Abdeckung (40L) und der oberen Abdeckung (40U) an der zur A-Säule (2) entgegengesetzten Seite so in Eingriff sind, dass sie getrennt werden können, wenn der Airbag (30) aufgeblasen wird; und
überlappende Verriegelungsabschnitte (46, 53) der unteren Abdeckung (40L) und der oberen Abdeckung (40U) an der Seite der A-Säule (2) zum Verbinden der unteren Abdeckung (40L) und der oberen Abdeckung (40U) in Eingriff sind.

2. Airbagvorrichtung zum Schutz von Fußgängern nach Anspruch 1, wobei
die Airbagvorrichtung zum Schutz von Fußgängern in einem eine Schnittstelle bildenden Eckbereich zwischen einem Säulen-Außenteil (2b) der Fahrzeugkarosserie und der Windschutzscheibe (4) angeordnet werden kann.

3. Airbagvorrichtung zum Schutz von Fußgängern nach Anspruch 1, wobei
die Abdeckung sich von einem oberen Ende zu einem unteren Ende einer Seitenkante der Windschutzscheibe (4) der Fahrzeugkarosserie erstrecken kann.

4. Airbagvorrichtung zum Schutz von Fußgängern nach einem der Ansprüche 1 bis 3, wobei
die Abdeckung (40) mit einer Basisplatte (20) versehen ist, die als Adapter zwischen der unteren Abdeckung (40L) und der oberen Abdeckung (40U) an der Seite der die Schnittstelle bildenden Ecke zum Verbinden der unteren Abdeckung (40L) und der oberen Abdeckung (40U) angeordnet ist.

5. Airbagvorrichtung zum Schutz von Fußgängern nach einem der Ansprüche 1 bis 4, wobei
die untere Abdeckung (40L) zum Unterbringen des gefalteten Airbagkörpers aufweist:
einen Bodenplattenabschnitt (41) zum Überlappen mit der Frontfläche der Windschutzscheibe,
Seitenwände (42, 43), die jeweils von Seitenkanten des Bodenplattenabschnitts (41) an der Seite der A-Säule und an der der A-Säule entgegengesetzten Seite ausgehend ansteigen, und
Stirnwände (44), die jeweils vom hinteren Ende und vom vorderen Ende des Bodenplattenabschnitts (41) ausgehend ansteigen.

6. Fahrzeug mit einer Airbagvorrichtung (10) zum Schutz von Fußgängern, wobei die Airbagvorrichtung (10) eine solche nach einem der Ansprüche 1 bis 5 ist, und
die Airbagvorrichtung (10) zum Schutz von Fußgängern entlang einer A-Säule (2) einer Fahrzeugkarosserie in einem eine Schnittstelle bildenden Eckbereich zwischen der A-Säule der Fahrzeugkarosserie und der Windschutzscheibe (4) angeordnet ist und mindestens ein Teil der Abdeckung eine Frontflächenseite einer Seitenkante der Windschutzscheibe abdeckt.

7. Fahrzeug mit einer Airbagvorrichtung zum Schutz von Fußgängern nach Anspruch 6, wobei
die A-Säule einen A-Säulen-Hauptkörper (2a) und ein an der Außenfläche des A-Säulen-Hauptkörpers angebrachtes Säulen-Außenteil (2b) aufweist; und
die Airbagvorrichtung (10) zum Schutz von Fußgängern in einem eine Schnittstelle bildenden Eckbereich zwischen dem Säulen-Außenteil und der Windschutzscheibe angeordnet ist.

8. Fahrzeug mit einer Airbagvorrichtung zum Schutz von Fußgängern nach Anspruch 1, wobei
die Abdeckung (40) sich von einem oberen Ende bis zu einem unteren Ende einer Seitenkante der Windschutzscheibe erstreckt.

## Revendications

1. Dispositif d'airbag pour piéton, destiné à être disposé le long d'un montant avant (2) d'une caisse de voiture, et prévu avec un corps d'airbag (30) plié, un couvercle (40) recouvrant le corps d'airbag plié, et un générateur (60) pour le gonflement de l'airbag, où
le dispositif d'airbag (10) pour piéton est destiné à être disposé sur une partie angulaire d'intersection entre le montant avant (2) de la caisse de voiture et un pare-brise (4), et au moins une partie du couvercle (40) recouvre une face avant d'un bord latéral du pare-brise (4), **caractérisé**
**en ce que** le couvercle (40) est prévu avec un couvercle inférieur (40L) recouvrant un côté inférieur du corps d'airbag plié et un couvercle supérieur (40U) recouvrant un côté supérieur du corps d'airbag plié ;
des parties de bord du couvercle inférieur (40L) et du couvercle supérieur (40U) sur le côté opposé au montant avant (2) sont en prise l'une avec l'autre de manière à pouvoir être séparées lorsque l'airbag (30) est gonflé ; et
des parties chevauchantes de verrouillage (46, 53) du couvercle inférieur (40L) et du couvercle supérieur (40U) sur le côté du montant avant (2) sont en prise l'une avec l'autre pour fixer le couvercle inférieur (40L) et le couvercle supérieur (40U) ensemble.

2. Dispositif d'airbag pour piéton selon la revendication 1, où le dispositif d'airbag pour piéton est destiné à être disposé sur une partie angulaire d'intersection entre un cache extérieur de montant (2b) de la caisse de voiture et le pare-brise (4).

3. Dispositif d'airbag pour piéton selon la revendication 1, où le couvercle est destiné à s'étendre d'une extrémité supérieure à une extrémité inférieure d'un bord latéral du pare-brise (4) de la caisse de voiture.

4. Dispositif d'airbag pour piéton selon l'une quelconque des revendications 1 à 3, où
le couvercle (40) est prévu avec une plaque de base (20) disposée entre le couvercle inférieur (40L) et le couvercle supérieur (40U) en tant qu'adaptateur sur le côté de l'angle d'intersection, pour fixer le couvercle inférieur (40L) et le couvercle supérieur (40U) ensemble.

5. Dispositif d'airbag pour piéton selon l'une quelconque des revendications 1 à 4, où
le couvercle inférieur (40L) est destiné au logement du corps d'airbag plié et comprend :
une partie de plaque de fond (41) destinée à chevaucher la face avant du pare-brise,
des parois latérales (42, 43) s'élevant de bords latéraux de la partie de plaque de fond (41) sur le côté du montant avant et sur le côté opposé au montant avant, respectivement, et
des parois d'extrémité (44) s'élevant de l'extrémité arrière et de l'extrémité avant de la partie de plaque de fond (41), respectivement.

6. Automobile avec un dispositif d'airbag (10) pour piéton, où le dispositif d'airbag (10) est tel que revendiqué dans l'une quelconque des revendications 1 à 5, et où le dispositif d'airbag (10) pour piéton est disposé le long d'un montant avant (2) d'une caisse de voiture sur une partie angulaire d'intersection entre le montant avant de la caisse de voiture et un pare-brise (4), et au moins une partie du couvercle recouvre une face avant d'un bord latéral du pare-brise.

7. Automobile avec un dispositif d'airbag pour piéton selon la revendication 6, où
le montant avant est prévu avec un corps principal (2a) de montant avant et un cache extérieur de montant (2b) disposé sur une face extérieure du corps principal de montant avant ; et où
ledit dispositif d'airbag (10) pour piéton est disposé sur une partie angulaire d'intersection entre le cache extérieur de montant et le pare-brise.

8. Automobile avec un dispositif d'airbag pour piéton selon la revendication 1, où
le couvercle (40) s'étend d'une extrémité supérieure à une extrémité inférieure d'un bord latéral du pare-brise.
